# EUROPÄISCHE PATENTSCHRIFT

(11) **EP 4 267 642 B1**
(45) Veröffentlichungstag und Bekanntmachung des Hinweises auf die Patenterteilung: **24.06.2026**
(21) Anmeldenummer: 21836570.8
(22) Anmeldetag: 16.12.2021
(51) Int. Cl.: C08G 18/40, C08G 18/48, C08G 18/63, C08G 18/76, C08G 18/20, C07D 233/32, B01J 31/02

(54) **NEUER KATALYSATOR ZUR HERSTELLUNG VON POLYURETHANEN**
NEW CATALYST FOR PRODUCING POLYURETHANES
NOUVEAU CATALYSEUR DESTINÉ À LA PRODUCTION DE POLYURÉTHANES

(30) Priorität: 23.12.2020 EP 20216908
(43) Veröffentlichungstag der Anmeldung: 01.11.2023
(73) Patentinhaber: BASF SE, 67056 Ludwigshafen am Rhein (DE)
(72) Erfinder: MUURONEN, Mikko, Juhani, Artturi, 2970 Schilde (BE); SCHUETTE, Markus, 49448 Lemfoerde (DE); LUTTER, Heinz-Dieter, 49448 Lemfoerde (DE); FAEHMEL, Manuela, 49448 Lemfoerde (DE); JOOST, Maximilian, 49448 Lemfoerde (DE); HAYDL, Alexander Michael, 68199 Mannheim (DE); DEGLMANN, Peter, 67056 Ludwigshafen (DE); BOLDUAN, Patrick, 67056 Ludwigshafen (DE); SIEBERT, Max Julian, 67056 Ludwigshafen (DE)
(74) Vertreter: BASF IP Association
(86) Internationale Anmeldenummer: PCT/EP2021/086325
(87) Internationale Veröffentlichungsnummer: WO 2022/136132

(56) Entgegenhaltungen:
- WO-A1-2015/050876
- WO-A1-2016/005479
- WO-A1-2020/084003
- CN-A- 106 832 176
- CN-A- 109 628 052

## Beschreibung

Die vorliegende Erfindung betrifft ein Verfahren zur Herstellung von Polyurethanen bei dem man (a) aromatisches Polyisocyanat mit (b) polymeren Verbindungen mit gegenüber Isocyanaten reaktiven Gruppen, (c) gegebenenfalls Kettenverlängerungs- und/oder Vernetzungsmittel, (d) Katalysator, (e) 0,1 bis 5 Gew.-% bezogen auf das Gesamtgewicht der Komponenten (a) bis (f), mindestens einer cyclischen Harnstoffstruktur der allgemeinen Formel 1 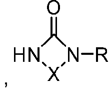 wobei -X- für einen substituierten oder unsubstituierten, 3-gliedrigen Rest steht, und R für einen Rest steht, ausgewählt aus einer substituierten oder unsubstituierten Alkyl- oder Heteroalkylgruppe, einer substituierten oder unsubstituierten Arylgruppe oder einer substituierten oder unsubstituierten Alkyl-Aryl- oder Heteroalkyl-Arylgruppe, (f) gegebenenfalls Treibmittel, und (g) gegebenenfalls Zusatzstoffen, zu einer Reaktionsmischung vermischt, die Reaktionsmischung zum Polyurethan umsetzt. Weiter betrifft die vorliegende Erfindung ein Polyurethan, vorzugsweise ein Polyurethanschaumstoff, erhältlich nach einem solchen Verfahren und die Verwendung eines solchen Polyurethanschaumstoffs zur Herstellung von Kissen, Sitzpolstern und Matratzen.

Polyurethane und Polyurethankatalysatoren sind bekannt. Bei der Herstellung der Polyurethane erfolgt die Umsetzung der Isocyanate und Polyole üblicherweise in Gegenwart von Katalysatoren, insbesondere stark basischen Aminkatalysatoren, enthaltend tertiäre Stickstoffatome oder Metallkatalysatoren. Nachteile der Metallkatalysatoren sind, dass diese Schwermetalle enthalten und daher eine geringe Umweltverträglichkeit aufweisen. Weiter neigen Metallkatalysatoren dazu, in Gegenwart von Wasser zu hydrolysieren und ihre katalytische Aktivität zu verlieren. Das führt dazu, dass der Einsatz in Reaktionsvormischungen, wie einer sogenannten Polyol-komponente, nur eingeschränkt möglich ist und viele Metallverbindungen dadurch ausgeschlossen sind.

Stark basische Aminkatalysatoren sind deutlich stabiler, haben aber den Nachteil, dass diese dazu tendieren, aus dem fertigen Polyurethan herauszumigrieren und dadurch zu unerwünschten Emissionen flüchtiger organischer Verbindungen und auch Geruchsemissionen führen. Häufig verursachen bekannte stark basische Katalysatoren auch weitere Emissionen organischer Verbindungen, beispielsweise von Aldehyden. Insbesondere bei Einsatz von Polyurethanen in geschlossenen Räumen, beispielsweise als Sitzpolster, Matratze oder im Innern von Automobilen Umsetzung ist dies unerwünscht.

Daher werden für solche Zwecke häufig einbaubare Katalysatoren eingesetzt, die eine gegenüber Isocyanat reaktive Gruppe aufweisen und während der Polyurethanherstellung in das Polyurethangerüst mit eingebaut werden. So können zwar die unerwünschten Emissionen der Katalysatoren selbst reduziert werden, allerding haben einbaubare Katalysatoren den Nachteil, dass diese auch die Rückreaktion und damit den Kettenabbau katalysieren. Polyurethane mit einbaubaren Katalysatoren haben daher häufig verschlechterte Alterungseigenschaften. Auch die Emissionen von Aldehyden kann durch einbaubare Katalysatoren nicht vermieden werden.

Es besteht daher Bedarf an Katalysatoren, die diese Nachteile nicht aufweisen. Ein Beispiel sind Lactame. Diese haben aber den Nachteil, dass sie nur wenig aktiv sind und in sehr großen Mengen eingesetzt werden müssen. Dadurch werden aber die mechanischen Eigenschaften im Polyurethan negativ beeinflusst. Daher werden Lactame üblicherweise zusammen mit stark basischen Aminkatalysatoren eingesetzt.

Ein weiterer Nachteil an traditionellen stark basischen Aminkatalysatoren ist, dass große Mengen dieser Katalysatoren bei der Herstellung von Polyurethanweichschaumstoffen insbesondere bei Wassergehalten von größer 1 Gew.-% und einem Isocyanatindex von kleiner als 100, dazu führen, dass aromatische Amine, insbesondere Toluoldiamin (TDA) und Methylendiphenylendiamin (MDA) in einem Konzentrationsbereich von 10-200 ppm nachgewiesen werden können. Diese treten insbesondere an der Oberfläche von Formschaumstoffen auf. Aromatische Amine sind aufgrund ihres kanzerogenen und gentoxikologischen Potenzials seit Jahrzehnten Gegenstand zahlreicher interner und externer Untersuchungen. Bekannte Maßnahmen zur Reduktion des Gehaltes an aromatischen Aminen beruhen auf der Verwendung von reaktiven Fängerverbindungen wie z.B. Carbonsäureanhydriden oder aliphatischen Isocyanaten.

In WO 2020/084003 ist der Einsatz von Lactamen zur Verringerung von aromatischen Aminen in solchen Schaumstoffen beschrieben. Solche gesundheitsschädlichen aromatischen Amine treten insbesondere bei Isocyanatindizes von kleiner als 100 auf. Eine mögliche Erklärung dafür die Tatsache, dass bei der Bildung der Polyurethanschaumstoffe nicht ausreichend Isocyanatgruppen zur Verfügung stehen, um mit MDA, welches sich durch die Isocyanat-Wasser-Reaktion bildet, weiter zu Harnstoffbindungen abzureagieren. Das so gebildete MDA kann sich insbesondere bei Herstellung von Formschaumstoffen durch Kondensation an der Grenzfläche zur kälteren Formoberfläche anreichern. Ein Nachteil der in WO 2020/161010 beschriebenen Lösung ist aber, dass relativ große Mengen der Lactame eingesetzt werden müssen und auch die Anwesenheit von Metallkatalysatoren und stark basischen Aminkatalysatoren zwingend erforderlich ist.

WO 2015050876 beschreibt den Einsatz von 5-gliedrigen Polyharnstoffen zur Reduzierung des Aldehydgehalts in mit Aldehyd verunreinigten Aminkatalysatoren. WO 2016005479 beschreibt den Einsatz von cyclischen Harnstoffen, die gegenüber Isocyanat reaktive Gruppen aufweisen, als Aldehydfänger bei der Herstellung von Polyurethanen.

Aufgabe der vorliegenden Erfindung war es daher, einen Katalysator für die Polyurethanreaktion zur Verfügung zu stellen, der die oben genannten Nachteile der stark basischen Aminkatalysatoren und der Metallkatalysatoren nicht aufweist und aktiver ist als die bekannten Lactame, so dass signifikante Anteile dieser Katalysatoren ersetzt werden können, ohne dass Nachteile für die mechanischen Eigenschaften der erhaltenen Polyurethane entstehen. Insbesondere soll so die Emission organischer, flüchtiger Verbindungen reduziert werden. Weiter war es Aufgabe der vorliegenden Erfindung, einen Polyurethankatalysator zur Verfügung zu stellen, der die Herstellung von Polyurethanschaumstoffen ermöglicht, wobei trotz eines hohen Gehalts an umweltfreundlichem Treibmittel Wasser und eines geringen Isocyanatindexes von kleiner als 95 Schaumstoffe mit einem deutlich verringerten Gehalt an aromatischen Aminen, insbesondere an der Oberfläche von Formschaumstoffen, erhalten werden.

Die erfindungsgemäße Aufgabe wird gelöst durch ein Verfahren zur Herstellung von Polyurethanen bei dem man (a) aromatisches Polyisocyanat mit (b) polymeren Verbindungen mit gegenüber Isocyanaten reaktiven Gruppen, (c) gegebenenfalls Kettenverlängerungs- und/oder Vernetzungsmittel, (d) Katalysator, (e) 0,1 bis 5 Gew.-% bezogen auf das Gesamtgewicht der Komponenten (a) bis (f), mindestens einer cyclischen Harnstoffstruktur der allgemeinen Formel 1 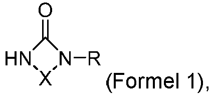 wobei -X- für einen substituierten oder unsubstituierten, 3-gliedrigen Rest steht, und R für einen Rest steht, ausgewählt aus einer substituierten oder unsubstituierten Alkyl- oder Heteroalkylgruppe, einer substituierten oder unsubstituierten Arylgruppe, oder einer substituierten oder unsubstituierten Alkyl-Aryl- oder Heteroalkyl-Arylgruppe , (f) gegebenenfalls Treibmittel, und (g) gegebenenfalls Zusatzstoffen, zu einer Reaktionsmischung vermischt, die Reaktionsmischung zum Polyurethan umsetzt. Weiter wird die vorliegende Aufgabe gelöst durch ein Polyurethan, vorzugsweise ein Polyurethanschaumstoff, erhältlich nach einem solchen Verfahren.

Polyurethan im Sinn der Erfindung umfasst alle bekannten Polyisocyanat-Polyadditionspro¬dukte. Diese umfassen Additionsprodukte aus Isocyanat und Alkohol so-wie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Poly¬urethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Formschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vor-zugsweise sind die erfindungsgemäßen Polyurethane Polyure¬thanschaumstoffe oder mas-sive Polyurethane, die, abgesehen von den im Folgenden erläuterten Polyurethanbaustei-nen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders be-vorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Wei-tere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Po-lyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich beispielsweise um einen Polyurethan-Weichschaumstoff handeln.

Bei Polyurethan Formschaumstoffen handelt es sich um Polyurethan-Schaumstoffe nach DIN 7726, die bedingt durch den Formgebungsprozess eine äußere Haut bzw. eine Randzone aufweisen, die eine höhere Dichte als der Kern aufweist. Die über den Kern und die Randzone gemittelte Gesamt-rohdichte kann dabei im Bereich von 15 bis 800 g/L liegen. Formschaumstoffe mit einer Dichte von größer als 100 g/L werden üblicherweise als Integralschaumstoffe bezeichnet. Auch bei Polyurethan-Formschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.Vorzugsweise handelt es sich bei den erfindungsgemäßen Polyurethanen um Polyurethanschaumstoffe, besonders bevorzugt Polyuretanhartschaumstoffe, Polyurethanhalbhartschaumstoffe oder Polyurethanweichschaumstoffe insbesondere um Polyurethanweichschaumstoffe, ganz besonders bevorzugt Polyurethan-Form-Weichschaumstoffe.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten aromatischen Polyisocyanate. Diese umfassen die aus dem Stand der Technik bekannten aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), 2,4- oder 2,6-Toluylendiisocyanat (TDI) oder deren Mischungen, Naphtylendiisocyanat (NDI) oder Mischungen daraus.

Diese enthalten vorzugsweise Toluoldiisocyanat-Isomere (TDI-Isomere) und Isomere des Methylendiphenylendiisocyanats sowie dessen höherkernige Homologe (als MDI bezeichnet). Besonders bevorzugt wird als aromatisches Polyisocyanat, eine Mischung enthaltend 2,4'-MDI, 4,4'-MDI und höherkernige Homologe des MDI eingesetzt. Weiter können auch modifizierte Isocyanate, wie Isocyanate, die durch Einbau von Gruppen, ausgehend von Isocyanatgruppen, in denen Polyisocyanate entstehen, eingesetzt werden. Beispiele für derartige Gruppen sind Allophanat-, Carbodiimid-, Uretonimin-, Isocyanurat-, Harnstoff- und Biuretgruppen. In einer bevorzugten Ausführungsform beträgt der Anteil von 2,4'-Diphenylmethandiisocyanat vorzugsweise 5 bis 30 Gew.-% und von 4,4'-Diphenylmethandiisocyanat vorzugsweise 40 bis 80 Gew.-%, jeweils bezogen auf das Gesamtgewicht der aromatischen Polyisocyanate (a). In einer bevorzugten Ausführungsform beträgt der Anteil von höherkernigen Homologen des Diphenylmethandiisocyanats 3 bis 30 Gew.-%, besonders bevorzugt 5 bis 25 Gew.-%.

Die aromatischen Polyisocyanate können auch in Form von Prepolymeren eingesetzt werden. Dazu werden die oben beschriebenen aromatischen Polyisocyanate (a1) im Überschuss mit Verbindungen mit gegenüber Isocyanaten reaktiven Verbindungen (a2) umgesetzt. Dabei werden als Verbindungen (a2) vorzugsweise die unter (b) genannten polymeren Verbindungen mit gegenüber Isocyanat reaktiven Gruppen eingesetzt. Werden Isocyanatprepolymere als aromatische Isocyanate (a) eingesetzt, weisen diese vorzugsweise einen NCO-Gehalt von 16 bis 31 Gew.-% auf.

Polymere Verbindungen mit gegenüber Isocyanat reaktiven Gruppen (b) weisen ein zahlenmittleres Molekulargewicht von mindestens 450 g/mol, besonders bevorzugt 460 bis 12000 g/mol auf und weisen mindestens zwei gegenüber Isocyanat reaktive Wasserstoffatome pro Molekül auf. Als polymere Verbindungen mit gegenüber Isocyanat reaktiven Gruppen (b) kommen be-vorzugt Polyesteralkohole, und/oder Polyetheralkohole mit einer Funktionalität von 2 bis 8, insbesondere von 2 bis 6, vorzugsweise von 2 bis 4 und einem mittleren Equivalentmolekulargewicht im Bereich von 400 bis 3000 g/mol, vorzugsweise 1000 bis 2500 g/mol, in Betracht. Insbesondere werden Polyetheralkohole eingesetzt.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Bei Anlagerung von Alkylenoxyden spricht man auch von Polyalkylenoxydpolyolen. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Zur Herstellung von viskoelastischen Polyurethanweichschaumstoffen werden insbesondere zwei- und/oder dreifunktionelle Polyalkylenoxydpolyole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Als Kettenverlängerungsmittel und/oder Vernetzungsmittel (c) werden Substanzen mit einem Molekulargewicht von kleiner 400 g/mol, bevorzugt von 60 bis 350 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder aromatische Diole, sowie Diole mit aromatischen Strukturen, mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 0,1 bis 20 Gew.-%, vorzugsweise 0,5 bis 10 Gew.-% und insbesondere 0,8 bis 5 Gew.-%, bezogen auf das Gewicht der Komponenten (b) und (c) zum Einsatz.

Als Katalysatoren (d) zur Herstellung der erfindungsgemäßen Polyurethanschaumstoffe können alle bekannten Polyurethankatalysatoren eingesetzt werden. Diese umfassen Metallkatalysatoren und/oder Aminkatalysatoren, die tertiäre Stickstoffatome aufweisen. Verbindungen (e) mit mindestens einer cyclischen Harnstoffstruktur der allgemeinen Formel 1 gelten erfindungsgemäß nicht als Katalysator (d). Vorzugsweise enthält der Katalysator (d) Aminkatalysator, wobei der Aminkatalysator tertiäre Stickstoffatome aufweist.

Wenn Aminkatalysatoren eingesetzt werden, so werden im Rahmen der vorliegenden Erfindung vorzugsweise Verbindungen mit tertiärem Stickstoffatom, die eine relative Reaktivität, bezogen auf Triethylendiamin, von mindestens 5% aufweisen, eingesetzt. Dabei wird die relative Reaktivität ermittelt, indem man die Geschwindigkeitskonstante der zu testenden Verbindung im Modellsystem Butanol-Phenylisocyanat mit einer Konzentration von jeweils 0,50 mol/Liter bei 50 °C im Lösungsmittel Acetonitril ermittelt und mit der von 1,4-Diazabicyclo[2.2.2]octan (Triethylendiamin) vergleicht. Eine relative Reaktivität von mindestens 5% ist dabei gegeben, wenn für den zu prüfenden Katalysator bei ansonsten identischen Bedingungen die Geschwindigkeitskonstante gegenüber der Geschwindigkeitskonstante bei Einsatz von 1,4-Diazabicyclo[2.2.2]octan maximal um den Faktor 20 kleiner ist. Details zur Bestimmung der Geschwindigkeitskonstante sind in Schwetlick et. Al. Im J. Chem. Soc Perkin Trans. 2, 1994, Seiten 599 bis 608 beschrieben (Geschwindigkeitskonstante k_{b} für 1,4-Diazabicyclo[2.2.2]octan unter den genannten Bedingungen = 2,68 dm⁶ mol⁻² s⁻¹).

Vorzugsweise enthalten die Aminkatalysatoren reaktive Aminkatalysatoren, das heißt solche, die gegenüber Isocyanatgruppen reaktive Gruppen enthalten. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen oder Hydroxylgruppen und besonders bevorzugt primäre Amingruppen oder Hydroxylgruppen auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen eine oder mehrere, vorzugsweise zwei, tertiäre Aminogruppen aufweisen.

Vorzugsweise tragen die tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- (H₃C-) und Ethylrest (H₃C-H₂C-) sowie einen weiteren organischen Rest. Beispiele für einbaubare Katalysatoren, die in einer bevorzugten Ausführungsform der Erfindung eingesetzt werden, sind ausgewählt aus der Gruppe, bestehend aus Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 3-Dimethylaminoisopropyl-diisopropanolamin, N-[2-[2-(Dimethylamino)ethoxy]ethyl]-N-methyl-1,3,-propandiamin und Mischungen davon. Besonders bevorzugt wird N-[2-[2-(Dimethylamino)ethoxy]ethyl]-N-methyl-1,3,-propandiamin eingesetzt.

Neben den einbaubaren Aminkatalysatoren können weiter übliche Amin-Katalysatoren zur Herstellung der Polyurethane eingesetzt werden. Diese sind vorzugsweise ausgewählt aus der Gruppe, bestehend aus 2,3-Dimethyl-3,4,5,6-tetrahydropyrimidin, Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)- und Mischungen daraus.

Dabei wird der Aminkatalysator vorzugsweise in einer solchen Menge eingesetzt, dass der Gehalt an tertiären Stickstoffatomen von 0,0001 bis 0,003 mol/100 g Schaum, vorzugsweise 0,0004 bis 0,002 und insbesondere 0,0005 bis 0,001 mol pro 100 g Schaum beträgt. Vorzugsweise enthalten die Aminkatalysatoren ausschließlich einbaubare Aminkatalysatoren.

Als Metallkatalysatoren können alle üblichen Metallkatalysatoren eingesetzt werden. Diese umfassen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, Dibutylzinn-dineodecanoat, sowie Bismutcarboxylate, wie Bismut(III)-neodecanoat, Bismut-2-ethylhexanoat und Bismut-octanoat oder Mischungen davon. Vorzugsweise werden als Metallkatalysator solche Metallkatalysatoren ausgewählt, die hydrolysestabil sind, wie beispielsweise Zinn(IV)-Verbindungen. Insbesondere wird Dibutylzinn-dineodecanoat als Metallkatalysator eingesetzt.

Die Katalysatoren und die einzusetzenden Katalysatormengen werden dabei so ausgewählt, dass die Polyurethanreaktionsmischung vorzugsweise eine Steigzeit von 30 bis 150 Sekunden, besonders bevorzugt 40 bis 110 Sekunden und insbesondere 50 bis 105 Sekunden aufweist, wobei die erfindungsgemäße Mengenbeschränkung für tertiären Stickstoff berücksichtigt wird. Als Steigzeit ist die Zeit bis zur Erreichung der maximalen Höhe im Beschertest bei einer Einwaage von 100 g Polyol-Komponente und 50 g Isocyanat-Komponente verstanden. Weiter liegt die Startzeit vorzugsweise im Bereich von 10 bis 30 Sekunden, besonders bevorzugt 12 bis 25 Sekunden und insbesondere 14 bis 22 Sekunden und die Gel- oder Fadenziehzeit bei vorzugsweise 60 bis 180 Sekunden, besonders bevorzugt bei 70 bis 160 und insbesondere bei 75 bis 145 Sekunden. Dabei werden die Start- und Gelzeit gemäß DIN EN 14315-1:2013 bei 25 °C im Bechertest bei einer Einwaage von 100 g Polyol-Komponente und 50 g Isocyanat-Komponente bestimmt.

Als Komponente (e) wird erfindungsgemäß eine Cyclische Harnstoffstruktur gemäß der Formel 1 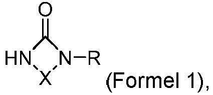 in einer Menge von 0,1 bis 5 Gew.-%, vorzugsweise 0,2 bis 3 und insbesondere 0,3 bis 2 Gew.-%, bezogen auf das Gesamtgewicht der Komponenten (a) bis (f) eingesetzt, wobei -X- für einen 3 gliedrigen Rest steht, der substituiert sein kann. Damit entsteht eine cyclische Harnstoffstruktur gemäß Formel 1, deren Ring inklusive der Harnstoffstruktur -NH-C(O)-NR- 6 Glieder aufweist. Vorzugsweise sind die Glieder des Rests X ausgewählt aus der Gruppe, bestehend aus - NR¹-, -O-, -CR²R³-, -N= und -CR⁴=. Im Falle des Rests -CR⁴= oder -N= besteht natürlich das Nachbarglied ebenfalls aus einem Glied, ausgewählt aus -CR⁴= oder -N= , so dass sich die Doppelbindung zwischen den beiden Gliedern ausbilden kann. Dabei stehen die Reste R¹ bis R⁴ jeweils unabhängig voneinander für Wasserstoff, einen Alkylrest, vorzugsweise Ethyl oder Methyl, oder Halogen, beispielsweise einen Fluoridrest oder einen Chloridrest. In einer ganz besonders bevorzugten Ausführungsform steht X für -(CH₂)₃- oder -CH₂-C(CH₃)₂-CH₂-, insbesondere -(CH₂)₃-. Der Rest R gemäß Formel 1 steht für eine substituierte oder unsubstituierte Alkyl- oder Heteroalkylgruppe, eine substituierte oder unsubstituierte Arylgruppe oder eine substituierte oder unsubstituierte Alkyl-Aryl- oder Heteroalkyl-Arylgruppe. Als Substituenten kommen beispielsweise Halogenidgruppen, Alkylgruppen, Hydroxylgruppen oder Amingruppen in Frage. In einer bevorzugten Ausführungsform der Erfindung enthält R zumindest ein gegenüber Isocyanat reaktives Wasserstoffatom, beispielsweise eine -OH oder -NH₂-Gruppe. Vorzugsweise steht R für Methyl, Ethyl, Propyl, Pentyl, Hexyl, einer oder mehrerer Alkylenoxideinheiten, beispielsweise Oxyethylen, Oxypropylen oder Mischungen aus Oxyethylen und Oxypropylen, und Phenyl, oder Phenylether. Besonders bevorzugt steht R für -Methyl, Ethyl, Oxyethylen, Oxypropylen oder Phenylmethoxyester, ganz besonders bevorzugt Methyl. Ebenfalls als cyclische Harnstoffverbindungen (e) eingesetzt werden können verbrückte cyclische Harnstoffstrukturen, wobei über den Rest R zwei cyclische Harnstoffstrukturen verbrückt sind. Dabei sind die zyklischen Harnstoffstrukturen vorzugsweise identisch, als Brücke dient vorzugsweise ein 1 bis 3-gliedriger Kohlenwasserstoff, der substituiert sein kann.

In einer Ausführungsform weist R eine gegenüber Isocyanat reaktive Gruppe auf, vorzugsweise eine reaktive Gruppe, ausgewählt aus einer endständigen -OH oder NH₂-Gruppe. In einer besonders bevorzugten Ausführungsform ist R unsubstituiert.

Ganz besonders bevorzugt steht R für einen linearen, unsubstituierten Kohlenwasserstoffrest, ausgewählt aus Methyl, Ethyl, Propyl, Pentyl und Hexyl, insbesondere steht R für einen Methylrest.

Cyclische Harnstoffstrukturen gemäß Formel 1 sind bekannt und bereits mehrfach beschrieben, beispielsweise in US 2013281451. Die Synthese kann beispielsweise erfolgen ausgehend von *N*-Halogenalkyl-3-alkylharnstoff, wie 1-(2-Chloroethyl)-3-methylharnstoff. Diese Harnstoffverbindungen werden in Gegenwart von Natriumhydrid cyclisiert. Diese Synthese ist ebenfalls in US 2013281451 beschrieben. Alternativ kann die Synthese ausgehend von Harnstoff und Diaminen erfolgen, wie beispielsweise beschrieben in EP 976796, oder durch Reaktion von Dialkylcarbonaten mit Diaminen, wie beispielsweise beschrieben in EP 2548869.

Soll als erfindungsgemäßes Verfahrensprodukt ein Polyurethanschaumstoff erhalten werden, werden Treibmittel (f) eingesetzt. Als Treibmittel (f) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, beispielsweise halogenierte gesättigte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid.

In einer bevorzugten Ausführungsform der vorliegenden Erfindung wird als Treibmittel (f) eine Mischung dieser Treibmittel, enthaltend (f1) Wasser, besonders bevorzugt ausschließlich Wasser, eingesetzt. Insbesondere wird als Treibmittel (f) Wasser, vorzugsweise ausschließlich Wasser eingesetzt, wenn Polyurethanweichschaumstoffe enthalten werden sollen.

Im Allgemeinen wird die Treibmittelmenge so angepasst, dass die gewünschte Dichte erhalten wird. Zur Herstellung der Polyurethanweichschaumstoffe wird die Treibmittelmenge vorzugsweise so gewählt, dass die Dichte des erfindungsgemäßen Polyurethanweichschaumstoffs im Bereich von 30 bis 70 g/L, vorzugsweise 40 bis 60 g/L und insbesondere 45 bis 55 g/L liegt. Insbesondere wird ausschließlich Wasser in einer Menge von 1 bis 6 Gew.-%, vorzugsweise 2 bis 5 Gew.-% mehr bevorzugt 2,5 bis 4,5 Gew.-% und insbesondere 3,0 bis 4,5 Gew.-%, bezogen auf das Gesamtgewicht der Komponenten (b) bis (f) eingesetzt.

Als Hilfsmittel und/oder Zusatzstoffe (g) werden beispielsweise oberflächenaktive Substanzen, Schaumstabilisatoren, Zellregler, äußere und innere Trennmittel, Füllstoffe, Pigmente, Farbstoffe, Flammschutzmittel, Antistatika, aromatische Amine reduzierende Substanzen, beispielsweise Lactame, Hydrolyseschutzmittel sowie fungistatisch und bakteristatisch wirkende Substanzen eingesetzt. Insbesondere der Einsatz von Lactamen, wie ε-Caprolactam zusammen mit den erfindungsgemäßen cyclischen Harnstoffen gemäß Formel 1 führt zu einer Reduktion an aromatischen Aminen im Polyurethan.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe

Bei der Herstellung der erfindungsgemäßen Polyurethane, beispielsweise der besonders bevorzugten Polyurethanweichschaumstoffe, werden üblicherweise die polymeren Verbindungen mit gegenüber Isocyanaten reaktiven Gruppen (b), die gegebenenfalls eingesetzten Kettenverlängerungs- und/oder Vernetzungsmittel (c), die Katalysatoren (d), cyclische Harnstoffstruktur (e) sowie die gegebenenfalls mit verwendeten Treibmittel (f) und Hilfsmittel und/oder Zusatzstoffe (g) zu einer sogenannten Polyolkomponente vermischt und in dieser Form mit den Polyisocyanaten a) zur Umsetzung gebracht.

Im Allgemeinen liegt das Äquivalenz-Verhältnis von NCO-Gruppen der Polyisocyanate (a) zur Summe der reaktiven Wasserstoffatome der Komponenten (b), (d), (e) und gegebenenfalls (c) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (d), (e) und gegebenenfalls (c) und (f) von 1,5 bis 20:1, vorzugsweise 1,5 bis 8:1 verwendet. Ein Verhältnis von 1:1 entspricht dabei einem Isocyanatindex von 100. Werden Polyurethan-weichschaumstoffe hergestellt, werden die Mischungsverhältnisse vorzugsweise so gewählt, dass das Äquivalenz-Verhältnis von NCO-Gruppen der Polyisocyanate (a) zur Summe der reaktiven Wasserstoffatome der Komponenten (b), (e) und (f) sowie, falls vorhanden, (c) und (d) vorzugsweise 0,5 bis 0,95 zu 1, besonders bevorzugt 0,6 bis 0,8 zu 1 und insbesondere 0,65 bis 0,75 zu 1 beträgt.

Die Herstellung der erfindungsgemäßen Polyurethane erfolgt vorzugsweise nach dem one-shot-Verfahren, beispielsweise mit Hilfe der Hochdruck- oder Niederdrucktechnik. Dabei werden die erfindungsgemäßen Polyurethane beispielsweise auf einem Band oder vorzugsweise in einer Form hergestellt. Die Polyurethanformschaumstoffe können in offenen oder geschlossenen, beispielsweise metallischen Formwerkzeugen hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat (a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Das so erhaltene Polyurethan, beispielsweise der erfindungsgemäße Polyurethanweichschaumstoff, ist ebenfalls Gegenstand der vorliegenden Erfindung. Der erfindungsgemäße Polyurethanweichschaumstoff ist vorzugsweise offenzellig und kann ohne Walken verwendet werden. Auch weist er eine vorzugsweise klebefreie Oberfläche auf.

Erfindungsgemäße Polyurethane können für alle üblichen Polyurethananwendungen eingesetzt werden. Besonders bevorzugt werden die erfindungsgemäßen Polyurethane aufgrund ihres vorteilhaft geringen Emissionsverhaltens im Innenraum von Gebäuden oder Verkehrsmitteln eingesetzt. Erfindungsgemäße Polyurethanweichschäume werden vorzugsweise im Fahrzeugbau, beispielsweise als Teppichrückseitenbeschichtung, als für Polster-, Sitz- oder Liegemöbel, für Matratzen oder Kissen, verwendet. Ein weiteres Einsatzgebiet sind Autosicherheitsteile, Auflageflächen, Armlehnen und ähnliche Teile im Möbelbereich und im Automobilbau.

Überraschenderweise wurde gefunden, dass insbesondere bei der Herstellung von Polyurethanformschaumstoffen durch Einsatz der Komponente gemäß Formel 1 in Kombination mit Aminkatalysator in einer solchen Menge, dass der Gehalt an tertiären Stickstoffatomen von 0,0001 bis 0,003 mol/100 g Schaum liegt, auch bei einem Isocyanatindex von deutlich kleiner 100 und einem Wasseranteil von deutlich größer als 1 Gew.-%, insbesondere an der Oberfläche von Formschaumstoffen, der Gehalt an aromatischen Aminen deutlich verringert und vorzugsweise unter die Nachweisgrenze gesenkt werden kann.

Ein weiterer Vorteil besteht darin, dass bei einem erfindungsgemäßen Polyurethan, insbesondere einem Polyurethanweichschaumstoff, der Gehalt an Aldehyden, gemessen am ausreagierten Polyurethan deutlich reduziert werden kann, oft um mehr als 50 %, bezogen auf einen konventionell katalysierten Polyurethan ohne Zugabe von Komponente (e).

Schließlich verbessern sich die mechanischen Eigenschaften des erfindungsgemäßen Polyurethanschaumstoffs, wie der Druckverformungsrest, insbesondere nach Feuchtwärmelagerung (wet compression set) sowie die Luftdurchlässigkeit und damit der Komfort.

Im Folgenden soll die Erfindung anhand von Beispielen dargelegt werden:
Herstellung von 1-Methyltetrahydropyrimidin-2(1H)-on (cyclische Harnstoffstruktur 1 gemäß Formel 1, wobei n gleich 3 ist und R für eine Methylgruppe steht):
Zu einer gerührten Lösung von *N*-Methylpropan-1,3-diamin (800 g, 9.1 mol, 1.0 equiv.) und NaOMe (40.2 g, 744 mmol, 5 wt.-%) wurde über einen Zeitraum von 7 Stunden bei 55 °C tropfenweise Dimethylcarbonat (865 g, 9.6 mol, 1.5 equiv.) zugegeben. Die Mischung wurde weitere 7 Stunden unter Rückfluss gerührt und anschließend abgekühlt und filtriert. Flüchtige Substanzen wurden entfernt und das Rohprodukt (1020 g, 8.9 mmol, 98%) mit einer Reinheit von > 95% wurde in durch fraktionierte Destillation in einer Vigreux-Kollonne bei reduziertem Druck weiter aufgereinigt, um die gewünschte Zielsubstanz mit einer Reinheit von größer 99 % zu erhalten (935 g, 8.2 mol, 90%; farbloses Öl, welches bei Raumtemperatur zu einem farblosen feststoff kristallisiert.

Das erhaltene Produkt wies die folgenden Eigenschaften auf:
Siedepunkt: 108 °C / 16 mbar.
Schmelzpunkt: 92 °C

Herstellung von 1-Aminopropyltetrahydropyrimidin-2(1H)-on (cyclische Harnstoffstruktur 2 gemäß Formel 1, wobei n gleich 3 ist und R für eine 1-Aminopropylgruppe steht):
Die Herstellung erfolgte analog zur cyclischen Harnstoffstruktur 1, wobei anstelle von 9,1 mol N-Methylpropan-1,3-diamin 9,1 mol (1194g) 3,3'-Diaminodipropylamin eingesetzt wird.

| | |
|---|---|
| Polyol 1: | Ein Glycerin gestartetes Polyoxypropylenpolyoxyethylen mit einem Polyyoxyethylenanteil von 13 Gew.-% bezogen auf den Gehalt an Alkyleneoxyd, einer Hydroxylzahl von 28 mg KOH/g und überwiegend primären Hydroxylgruppen |
| Polyol 2: | Polymerpolyol auf der Basis von Styrol und Acrylnitril im Verhältnis 2:1, Feststoffgehalt 44 Gew-% und einer Hydroxylzahl von 20 mg KOH/g |
| Polyol 3: | Glycerin gestartetes Polyoxypropylenpolyoxyethylen mit einem Polyoxyethylenanteil, bezogen auf den Gehalt an Alkylenoxyd, von 74 Gew.-% und einer Hydroxylzahl von 42 mg KOH/g. |
| Polyol 4: | Glycerin gestartetes Polyoxypropylenpolyoxyethylen mit einem Polyoxyethylenanteil von 13 Gew.-% bezogen auf den Gehalt an Alkyleneoxyd, einer Hydroxylzahl von 35 mg KOH/g und ca. 85% primären Hydroxylgruppen |
| Polyol 5: | Polymerpoyol /Graftpolyol mit einem Copolymer aus Styrol / Acrylnitil im Ver hältnis 2:1 (m:m) mit einer OH-Zahl von 20 und einem Feststoff Gehalt von 45 Gew-%. |
| Polyol 6: | Glycerin gestartetes Polyoxypropylen und einer Hydroxylzahl von 42 mg KOH/g und ausschließlich sekundären OH-Gruppen. |
| Katalysator 1: | 33 Gew-%ige Lösung Triethylendiamin in Dipropylenglykol |
| Katalysator 2: | N-[2-[2-(Dimethylamino)ethoxyl]-N-methyl-1,3,-propandiamin Einbaubarer, tertiärer Aminkatalysator der Fa. Evonik, erhältlich unter dem Handelsnamen Dabco ^{®} NE 300 |
| Katalysator 3: | N,N-Dimethyl-N',N'-di(2-hydroxypropyl)-1,3-propandiamin, erhältlich von der Firma Huntsman unter dem Handelsnahmen Jeffcat ^{®} DPA. |
| Katalysator 4: | 3-(Dimethylamino)propylamin gestartetes Polyoxypropylen mit einem Polyoxypropylenanteil von 77 Gew.% und einer Hydroxylzahl von 250 mg KOH/g. |
| Katalysator 5: | 10 Gew.-%-ige Lösung von Dimethylzinn-dineodecanotat in Polyol 1, erhältlich unter dem Handelsnamen Fomrez ^{®} UL 28; PU Katalysator der Firma Momentive. |
| Katalysator 6: | 3-Dimethylaminopropylamin (DMAPA) |
| Isocyanat 1: | Mischung von MDI und höherkernigen Homologen des MDI mit einer Viskosität bei 25 °C von 210 mPas und einem NCO-Gehalt von 31,5 Gew.-%. |
| Isocyanat 2: | Mischung aus 49 Gew.-Teilen 4,4'-MDI, 48,6 Gew.-Teile 2,4'-MDI und 2,4 Gew.-Teilen 2,2'-MDI, der NCO-Gehalt beträgt 33,5 Gew.-%. |
| Isocyanat 3: | Monomeres 4,4'-MDI mit einem NCO-Gehalt von 33,5 Gew.-%. |
| Stabilisator 1: | Emissionsarmer Silikonstabilisator der Firma Evonik, erhältlich unter dem Handelsnamen Tegostab B 8715 LF2. |
| Stabilisator 2: | Emissionsarmer Silikonstabilisator der Firma Evonik, erhältlich unter dem Handelsnamen Tegostab B 8716 LF2. |

Ausgehend von den in Tabelle 1 angegebenen Ausgangsstoffen wurde in einer geschlossenen Form Prüfplatten der Dimension 18,5 x 19,5 x 3,8 cm bei 50 °C Formentemperatur hergestellt. Dabei wurde eine Polyolkomponente gemäß der in den Tabellen angegebenen Zusammensetzungen hergestellt, in einem Hochdruckmischkopf bei 35 °C mit der angegebenen Isocyanat-komponente bei angegebenem Isocyanatindex vermischt und in die auf 60 °C temperierte Form gegeben. Die Mengenangaben der Einsatzstoffe beziehen sich dabei auf Gewichtsteile. Die MDA-Konzentration ist in ppm angegeben. Nach 5 Minuten wurde das Formteil entformt, die Dichte betrug ca. 50 g/dm³.

**Tabelle 1**

| | Vergl. 1 | Beispiel 1 | Beispiel 2 | Beispiel 3 |
|---|---|---|---|---|
| Polyol 1 | 76,65 | 76,65 | 77,85 | 76,65 |
| Polyol 2 | 15,00 | 15,00 | 15,00 | 15,00 |
| Polyol 3 | 2,00 | 2,00 | 2,00 | 2,00 |
| Katalysator 1 | 0,10 | 0,10 | | 0,10 |
| Katalysator 2 | 0,10 | 0,10 | | 0,10 |
| Katalysator 3 | 1,00 | | | - |
| Katalysator 4 | 1,00 | 1,00 | - | 1,00 |
| Katalysator 5 | | | | |
| ε-Caprolactam | | | | |
| 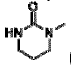 (cyclische Harnstoffstruktur 1) | - | 1,0 | 1,0 | - |
| 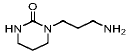 (cyclische Harnstoffstruktur 2) | - | - | - | 1,0 |
| Stabilisator 1 | 0,50 | 0,50 | 0,50 | 0,50 |
| Stabilisator 2 | 0,2 | 0,2 | 0,2 | 0,2 |
| Wasser | 3,45 | 3,45 | 3,45 | 3,45 |
| Isocyanatkomponente | | | | |
| Isocyanat 1 | 37,5 | 37,5 | 37,5 | 37,5 |
| Isocyanat 2 | 42,1 | 42,1 | 42,1 | 42,1 |
| Isocyanat 3 | 20,4 | 20,4 | 20,4 | 20,4 |
| Index | 75,0 | 75,0 | 75,0 | 75,0 |
| Startzeit [s] | 15 | 13 | 22 | 16 |
| Gelzeit [s] | 53 | 50 | 81 | 63 |
| Steigzeit [s] | 75 | 79 | 210 | 127 |
| 2,2'-MDA | 4 | 2 | <1 | <1 |
| 2,4'-MDA | 73 | 10 | <1 | 11 |
| 4,4'-MDA | 17 | <1 | <1 | 7 |
| Druckverformungsrest (75 %, 22h, 70°C) | 64,1 % | 8,9 % | | |
| Wet compression set (%) | 82,6 % | 11,9 % | | |
| Luftdurchlässigkeit (dm³/s) | 0,286 | 0,450 | | |
| Formaldehyd [µg/m³] | 1037 | 571 | | |
| Acetaldehyd [µg/m³] | 327 | 206 | | |

**Tabelle 1 (Fortsetzung)**

| | Vergl 2 | Verql. 3 | Beispiel 4 | Vergl. 4 | Beispiel 5 | Beispiel 6 |
|---|---|---|---|---|---|---|
| Polyol 1 | 76,85 | 77,15 | 78,05 | 76,65 | 75,65 | 75,65 |
| Polyol 2 | 15,00 | 15,00 | 15,00 | 15,00 | 15,00 | 15,00 |
| Polyol 3 | 2,00 | 2,00 | 2,00 | 2,00 | 2,00 | 2,00 |
| Katalysator 1 | | | | 0,10 | 0,10 | 0,10 |
| Katalysator 2 | 0,20 | 0,20 | 0,20 | 0,10 | 0,10 | 0,10 |
| Katalysator 3 | | | | - | - | - |
| Katalysator 4 | | | | 1,00 | 1,00 | 1,00 |
| Katalysator 5 | 0,3 | | 0,3 | | | |
| ε-Caprolactam | 1,5 | 1,5 | | 1,0 | 1,0 | 1,0 |
| 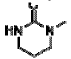 | | | 0,3 | | 1,0 | - |
| 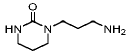 | - | - | - | - | | 1,0 |
| Stabilisator 1 | 0,50 | 0,50 | 0,50 | 0,50 | 0,50 | 0,50 |
| Stabilisator 2 | 0,20 | 0,20 | 0,20 | 0,20 | 0,20 | 0,20 |
| Wasser | 3,45 | 3,45 | 3,45 | 3,45 | 3,45 | 3,45 |
| Isocyanatkomponente | | | | | | |
| Isocyanat 1 | 37,5 | 37,5 | 37,5 | 37,5 | 37,5 | 37,5 |
| Isocyanat 2 | 42,1 | 42,1 | 42,1 | 42,1 | 42,1 | 42,1 |
| Isocyanat 3 | 20,4 | 20,4 | 20,4 | 20,4 | 20,4 | 20,4 |
| Index | 75,0 | 75,0 | 75,0 | 75,0 | 75,0 | 75,0 |
| Startzeit [s] | 15 | 14 | 15 | 17 | 12 | 14 |
| Gelzeit [s] | 75 | 76 | 75 | 62 | 49 | 60 |
| Steigzeit [s] | 100 | 78 | 92 | 106 | 72 | 96 |
| 2,2'-MDA | - | - | - | 2 | <1 | <1 |
| 2,4'-MDA | 1 | - | - | 11 | 7 | 11 |
| 4,4'-MDA | < 1 | - | - | <1 | <1 | 4 |
| Bemerkung | | Schaum kollabiert | | | | |

Vergleich 1 entspricht einem konventionell katalysiertem Schaumstoff. Hier werden schnelle Reaktionszeiten erreicht, allerdings treten hohe Werte aromatischen Aminen auf und auch Aldehydemissionen sind hoch. Durch Ersetzen eines Aminkatalysators (Kat 3) durch die cyclische Harnstoffstruktur 1 wird ein ähnliches Reaktionsprofil erhalten, wobei die Aldehydemissionen des Schaumstoffs aber deutlich reduziert sind (Beispiel 1). Auch der Gehalt an aromatischen Aminen ist stark reduziert. Wird der Gehalt an Aminkatalysator weiter reduziert, verringert sich auch der Gehalt an aromatischem Amin weiter (Beispiel 2). In Beispiel 3 ist gezeigt, dass dieser Effekt auch mit analogen cyclischen Harnstoffen erreicht wird.

Vergleichsversuche 2 und 3 zeigen, dass auch bei Einsatz von großen Mengen ε-Caprolactam anstelle der cyclischen Harnstoffe ein Schaumstoff nur unter zusätzlicher Verwendung von Metallkatalysator erhalten wird (Kat 5), andernfalls kollabiert der Schaum. Dagegen kann unter Einsatz von geringen Mengen cyclischem Harnstoff 1 (0,3 Teile anstelle von 1,5 Teilen) auch ohne Verwendung von Metallkatalysator ein Schaumstoff erhalten werden (Beispiel 4). Schließlich führt der zusätzliche Einsatz von erfindungsgemäßem cyclischem Harnstoff zum ε-Caprolactam (Beispiele 5 und 6 gegenüber Vergleichsbeispiel 4) zu deutlich schnelleren Reaktionszeiten bei gleichzeitig verringertem Gehalt an aromatischem Amin.

### Aromatische Amine:

Die Bestimmung der Konzentration an aromatischer Aminen an Formteilen aus Polyurethanweichformschaum erfolgte in Anlehnung an die Prüfmethode der ISOPA I.I.I.: Nachweismethode auf MDA (ISOPA I.I.I. ref. 11399, "Robust method for the determination of the diaminodiphenylmethane content of flexible polyurethane foams". Dazu wurden die Proben nach der Herstellung gesägt und sofort in Aluminiumfolie und einem Kunststoffbeutel verpackt. Die Dauer zwischen Entformen und Verpacken lag bei 30min.

Die Oberfläche des Formschaumstoffs wurde in Form von Platten mit einer Dicke von 0,5 cm abgetrennt. Aus diesen Platten wurden Proben mit jeweils 3 cm x 3 cm ausgeschnitten und zu einem Würfel von 3 x 3 x 3 cm zusammen gestapelt und vermessen. Der Weichschaumwürfel wurde in einem Becherglas mit 10 mL 1%-iger Essigsäure (Angabe in Massen-%) versetzt. Der Würfel wurde zwanzigfach mittels eines Stempels (ca. 4 cm Durchmesser) ausgequetscht und die Lösung in einen 50ml Kolben übergeführt. Anschließend wurde der Stampfprozess zwei Mal mit jeweils weiteren 10mL 1%-iger Essigsäure wiederholt, wobei auch diese Essigsäure nach dem Stampfprozess in den Kolben übergeführt wurde. Nach Vereinigung der erhaltenen Extrakte wurde auf 50 mL mit 1%-iger Essigsäure aufgefüllt. Diese Lösung wurde zur Vorbereitung der HPLC-Analyse durch ein 0,45µm-Filter filtriert. Es erfolgte eine Doppelbestimmung in allen Fällen. Die MDA-Gehalte werden in ppm angegeben.

### Emissionswerte:

Die Schaumproben aus Vergleichsbeispiel 8 und Beispiel 5 wurden mittels Kammermethode und anschließender HPLC untersucht. Zur Bestimmung von Formaldehyd wurde analog ASTM D-5116-06 vorgegangen. Die Kammergröße betrug 4,7 Litern. Als Polyurethanproben wurden Schaumstoffe mit einer Größe von 110 mm x 100 mm x 25 mm aus dem Kern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd im Eluat wurde mittels HPLC bestimmt. Nach diesem Aufbau liegt die Nachweisgrenze für Formaldehydemissionen bei ≤ 11 µg/m³.

Tabelle 2 vergleicht den Einsatz der erfindungsgemäßen cyclischen Harnstoffstruktur 1 mit einer analogen, nicht erfindungsgemäßen 5-gliedrigen cyclischen Harnstoffstruktur (1-Methyl-2-imidazolidone).

**Tabelle 2**

| | Beispiel 5 | Vergleich 6 |
|---|---|---|
| Polyol 4 | 80,320 | 80,320 |
| Polyol 5 | 10,000 | 10,000 |
| Polyol 3 | 4,000 | 4,000 |
| Katalysator 4 | 0,875 | 0,875 |
| Katalysator 6 | 0,350 | 0,350 |
| Glycerin | 0,300 | 0,300 |
| Stabilisator 2 | 0,350 | 0,350 |
| Wasser | 3,450 | 3,450 |
| Cyclische Harnstoffstruktur 1 | 0,800 | |
| 1-methyl-2-imidazolidone | | 1,200 |
| | | |

| Isocyanatkomponente | | |
|---|---|---|
| | | |
| Isocyanat 1 | 40,00 | 40,00 |
| Isocyanat 2 | 23,00 | 23,00 |
| Isocyanat 3 | 22,00 | 22,00 |
| Polyol 3 | 5,00 | 5,00 |
| Polyol 6 | 10,00 | 10,00 |
| | | |
| Index | 75 | 75 |
| Startzeit [s] | 15 | 17 |
| Gelzeit [s] | 80 | 95 |
| Steigzeit [s] | 100 | 115 |
| 2,2'-MDA | 3 | 3 |
| 2,4'-MDA | 15 | 17 |
| 4,4'-MDA | <1 | 1 |

| Emissionen | | |
|---|---|---|
| VOC (Gesamtemission/Zeitwert (ppm) | 1080 | 2124 |

Die erfindungsgemäße 6-gliedrigen cyclischen Harnstoffstruktur weist gegenüber der analogen, nicht erfindungsgemäßen 5-gliedrigen Harnstoffstruktur eine erhöhte katalytische Aktivität auf, was sich trotz geringerer Einsatzmenge zu verringerten Start- Gel- und Steigzeiten. Weiter führt der Einsatz der erfindungsgemäßen 6-gliedrigen cyclischen Harnstoffstruktur zu einer Verringerung der flüchtigen organischen Verbindungen VOC gemäß VDA 277. Schließlich ist im erfindungsgemäßen Beispiel auch der Gehalt an aromatischen Aminen leicht verringert.

## Patentansprüche

1. Verfahren zur Herstellung von Polyurethanen bei dem man
a) aromatisches Polyisocyanat mit
b) polymeren Verbindungen mit gegenüber Isocyanaten reaktiven Gruppen,
c) gegebenenfalls Kettenverlängerungs- und/oder Vernetzungsmittel,
d) Katalysator,
e) 0,1 bis 5 Gew.-% bezogen auf das Gesamtgewicht der Komponenten (a) bis (f) mindestens einer cyclischen Harnstoffstruktur der allgemeinen Formel 1 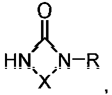 wobei -X- für einen substituierten oder unsubstituierten, 3-gliedrigen Rest steht, und R für einen Rest steht, ausgewählt aus einer substituierten oder unsubstituierten Alkyl-oder Heteroalkylgruppe einer substituierten oder unsubstituierten Arylgruppe oder einer substituierten oder unsubstituierten Alkyl-Aryl- oder Heteroalkyl-Arylgruppe,
f) gegebenenfalls Treibmittel, und
g) gegebenenfalls Zusatzstoffen,
zu einer Reaktionsmischung vermischt, die Reaktionsmischung zum Polyurethan umsetzt.

2. Verfahren nach Anspruch 1, **dadurch gekennzeichnet, dass** die Glieder des Rests X ausgewählt aus der Gruppe, bestehend aus-NR¹-, -O-, -CR²R³-, -N= und -CR⁴=, wobei die Reste R¹ bis R⁴ jeweils unabhängig voneinander für Wasserstoff, einen Alkylrest, vorzugsweise Ethyl oder Methyl, oder Halogen steht.

3. Verfahren nach Anspruch 1 oder 2, **dadurch gekennzeichnet, dass** X für -(CH₂)₃- steht.

4. Verfahren nach einem der Ansprüche 1 oder 2, **dadurch gekennzeichnet, dass** X für - CH₂-C(CH₃)₂-CH₂-steht.

5. Verfahren nach einem der Ansprüche 1 bis 4, **dadurch gekennzeichnet, dass** der Gehalt an Wasser, bezogen auf die Komponenten (b) bis (f), 1 bis 6 Gew.-% beträgt.

6. Verfahren nach einem der Ansprüche 1 bis 5, **dadurch gekennzeichnet, dass** die Komponenten (a) bis (e) und, falls vorhanden (f) und (g), bei einem Isocyanatindex von 50 bis 95 zum Polyurethan umgesetzt werden.

7. Verfahren nach einem der Ansprüche 1 bis 6, **dadurch gekennzeichnet, dass** neben Wasser (f1) keine weiteren Treibmittel enthalten sind.

8. Verfahren nach einem der Ansprüche 1 bis 7, **dadurch gekennzeichnet, dass** der Katalysator neben der Verbindung gemäß der Formel 1 Aminkatalysator enthält wobei der Aminkatalysator tertiäre Stickstoffatome aufweist und in einer solchen Menge eingesetzt wird, dass der Gehalt an tertiären Stickstoffatomen im Aminkatalysator, bezogen auf das Gewicht der Ausgangskomponenten (a) bis (f), von 0,0001 bis 0,003 mol /100 g Schaum beträgt.

9. Verfahren nach einem der Ansprüche 1 bis 8, **dadurch gekennzeichnet, dass** die tertiären Stickstoffatome des Aminkatalysators die tertiären Aminogruppen zwei Reste, unabhängig voneinander ausgewählt aus Methyl- (H₃C-) und Ethylrest (H₃C-H₂C-) sowie einen weiteren organischen Rest aufweisen.

10. Verfahren nach einem der Ansprüche 1 bis 9, **dadurch gekennzeichnet, dass** der Aminkatalysator ausgewählt ist aus der Gruppe, bestehend aus Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethyl-bis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethylamin, N,N,N-Trimethyl-N-(3 aminopropyl)-bis(aminoethylether), 3-Dimethylaminoisopropyl-diisopropanolamin, N-[2-[2-(Dimethylamino)ethoxy]ethyl]-N-methyl-1,3,-propandiamin und Mischungen davon.

11. Verfahren nach einem der Ansprüche 7 bis 10, **dadurch gekennzeichnet, dass** Katalysator neben Aminkatalysator Metallkatalysator aufweist, wobei der Metallkatalysator vor-zugsweise ein Zinn(IV)-katalysator ist.

12. Verfahren nach einem der Ansprüche 1 bis 11, **dadurch gekennzeichnet, dass** das aromatische Polyisocyanat Isomere und Homologe des Diphenylmethandiisocyanats enthält.

13. Verfahren nach einem der Ansprüche 1 bis 12, **dadurch gekennzeichnet, dass** zur Herstellung der Reaktionsmischung eine Isocyanatkomponente (A), enthaltend aromatisches Polyisocyanat (a), und eine Polyolkomponente (B), enthaltend eine Mischung, umfassend polymeren Verbindungen mit gegenüber Isocyanaten reaktiven Gruppen (b), Katalysator (d) und Treibmittel, enthaltend Wasser (e) vermischt werden.

14. Verfahren nach einem der Ansprüche 1 bis 13, **dadurch gekennzeichnet, dass** die Umsetzung der Reaktionsmischung zum Polyurethanweichschaumstoff in einer Form erfolgt.

15. Polyurethan, erhältlich nach einem Verfahren gemäß einem der Ansprüche 1 bis 14.

16. Verwendung eines Polyurethanschaumstoffs nach Anspruch 15 zur Herstellung von Kissen, Sitzpolstern, Matratzen.

## Claims

1. Process for producing polyurethanes, in which
a) aromatic polyisocyanate is mixed with
b) polymeric compounds having groups reactive toward isocyanates,
c) optionally chain-extending and/or crosslinking agents,
d) catalyst,
e) 0.1 to 5 wt.-%, based on the total weight of components (a) to (f), of at least one cyclic urea structure of general formula 1 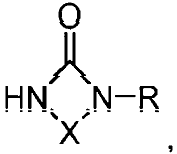
wherein -X- stands for a substituted or unsubstituted, 3-membered residue, and R stands for a residue selected from the group consisting of a substituted or unsubstituted alkyl or heteroalkyl group,
a substituted or unsubstituted aryl group or a
substituted or unsubstituted alkyl-aryl or heteroalkyl-aryl group,
f) optionally blowing agent, and
g) optionally additives,
to form a reaction mixture, and the reaction mixture is reacted to form polyurethane.

2. Process according to claim 1, **characterized in that** the members of the residue X are selected from the group consisting of -NR¹-, -O-, -CR²R³-, -N= and -CR⁴=, wherein the residues R¹ to R⁴, in each case independently of one another, are selected from hydrogen, a C1-6 alkyl residue, preferably ethyl or methyl, or halogen.

3. Process according to claim 1 or 2, **characterized in that** X stands for -(CH₂)₃-.

4. Process according to any one of claims 1 or 2, **characterized in that** X stands for -CH₂-C(CH₃)₂-CH₂-.

5. Process according to any one of claims 1 to 4, **characterized in that** the content of water, based on components (b) to (f), is 1 to 6 wt.-%.

6. Process according to any one of claims 1 to 5, **characterized in that** components (a) to (e) and, if present, (f) and (g), are reacted at an isocyanate index of 50 to 95 to form polyurethane.

7. Process according to any one of claims 1 to 6, **characterized in that**, in addition to water, no further blowing agents are contained.

8. Process according to any one of claims 1 to 7, **characterized in that** the catalyst, in addition to the compound according to formula 1, contains amine catalyst, wherein the amine catalyst has tertiary nitrogen atoms and is used in such amounts that the content of tertiary nitrogen atoms in the amine catalyst, based on the weight of starting components (a) to (f), is 0.0001 to 0.003 mol/100 g of foam.

9. Process according to any one of claims 1 to 8, **characterized in that** the tertiary nitrogen atoms of the amine catalyst have two residues of tertiary amino groups which, independently of one another, are selected from methyl- (H₃C-) and ethyl residue (H₃C-H₂C-) and one further organic residue.

10. Process according to any one of claims 1 to 9, **characterized in that** the amine catalyst is selected from the group consisting of bisdimethylaminopropylurea, bis(N,N-dimethylaminoethoxyethyl)carbamate, dimethylaminopropylurea, N,N,N-trimethyl-N-hydroxyethylbis(aminopropylether), N,N,N-trimethyl-N-hydroxyethyl-bis(aminoethylether), diethylethanolamine, bis(N,N-dimethyl-3-aminopropyl)amine, dimethylaminopropylamine, 3-dimethylaminopropyl-N,N-dimethylpropan-1,3-diamine, dimethyl-2-(2-aminoethoxyethanol) and (1,3-bis(dimethylamino)-propan-2-ol), N,N-bis-(3-dimethylamino-propyl)-N-isopropanolamine, bis-(dimethylaminopropyl)-2-hydroxyethylamine, N,N,N-trimethyl-N-(3 aminopropyl)-bis(aminoethylether), 3-dimethylaminoisopropyl-diisopropanolamine, N-[2-[2-(dimethylamino)ethoxylethyl]-N-methyl-1,3-propanediamine and mixtures thereof.

11. Process according to any one of claims 7 to 10, **characterized in that** the catalyst, in addition to amine catalyst, contains metal catalyst, wherein the metal catalyst preferably is a tin(IV) catalyst.

12. Process according to any one of claims 1 to 11, **characterized in that** the aromatic polyisocyanate contains isomers and homologues of diphenylmethane diisocyanate.

13. Process according to any one of claims 1 to 12, **characterized in that**, for producing the reaction mixture, an isocyanate component (A), containing aromatic polyisocyanate (a), and a polyol component (B), containing a mixture comprising polymeric compounds having groups reactive toward isocyanates (b), catalyst (d) and blowing agent, are mixed.

14. Process according to any one of claims 1 to 13, **characterized in that** the reaction mixture is reacted to form polyurethane flexible foam in a mold.

15. Polyurethane obtainable according to a process according to any one of claims 1 to 14.

16. Use of a polyurethane foam according to claim 15 for producing cushions, seat cushions, mattresses.

## Revendications

1. Procédé de fabrication de polyuréthanes, dans lequel
a) un polyisocyanate aromatique est mélangé avec
b) des composés polymériques comportant des groupes réactifs vis-à-vis des isocyanates,
c) le cas échéant des agents d'allongement de chaîne et/ou de réticulation,
d) un catalyseur,
e) 0,1 à 5 % en poids, rapporté au poids total des composants (a) à (f), d'au moins une structure d'urée cyclique de formule générale 1 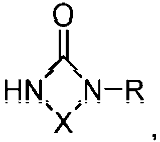
dans laquelle -X- représente un résidu substitué ou non substitué, à 3 chaînons, et R représente un résidu choisi dans le groupe constitué d'un groupe alkyle ou hétéroalkyle substitué ou non substitué,
d'un groupe aryle substitué ou non substitué ou d'un
groupe alkyl-aryle ou hétéroalkyl-aryle substitué ou non substitué,
f) le cas échéant un agent gonflant, et
g) le cas échéant des additifs,
pour former un mélange réactionnel, et le mélange réactionnel est transformé en polyuréthane.

2. Procédé selon la revendication 1, **caractérisé en ce que** les chaînons du résidu X sont choisis dans le groupe constitué de -NR¹-, -O-, -CR²R³-, -N= et -CR⁴=, les résidus R¹ à R⁴ étant, chacun indépendamment les uns des autres, choisis parmi l'hydrogène, un résidu alkyle en C1-6, de préférence éthyle ou méthyle, ou un halogène.

3. Procédé selon la revendication 1 ou 2, **caractérisé en ce que** X représente -(CH₂)₃-.

4. Procédé selon l'une quelconque des revendications 1 ou 2, **caractérisé en ce que** X représente -CH₂-C(CH₃)₂-CH₂-.

5. Procédé selon l'une quelconque des revendications 1 à 4, **caractérisé en ce que** la teneur en eau, rapportée aux composants (b) à (f), est de 1 à 6 % en poids.

6. Procédé selon l'une quelconque des revendications 1 à 5, **caractérisé en ce que** les composants (a) à (e) et, le cas échéant, (f) et (g), sont transformés en polyuréthane à un indice d'isocyanate de 50 à 95.

7. Procédé selon l'une quelconque des revendications 1 à 6, **caractérisé en ce qu'**aucun autre agent gonflant n'est contenu en plus de l'eau.

8. Procédé selon l'une quelconque des revendications 1 à 7, **caractérisé en ce que** le catalyseur, en plus du composé selon la formule 1, contient un catalyseur amine, le catalyseur amine présentant des atomes d'azote tertiaires et étant utilisé en une telle quantité que la teneur en atomes d'azote tertiaires dans le catalyseur amine, rapportée au poids des composants de départ (a) à (f), est de 0,0001 à 0,003 mol/100 g de mousse.

9. Procédé selon l'une quelconque des revendications 1 à 8, **caractérisé en ce que** les atomes d'azote tertiaires du catalyseur amine présentent deux résidus des groupes amino tertiaires qui, indépendamment les uns des autres, sont choisis parmi le résidu méthyle (H₃C-) et le résidu éthyle (H₃C-H₂C-) ainsi qu'un autre résidu organique.

10. Procédé selon l'une quelconque des revendications 1 à 9, **caractérisé en ce que** le catalyseur amine est choisi dans le groupe constitué de bisdiméthylaminopropylurée, bis(N,N-diméthylaminoéthoxyéthyl)carbamate, diméthylaminopropylurée, N,N,N-triméthyl-N-hydroxyéthylbis(aminopropyléther), N,N,N-triméthyl-N-hydroxyéthyl-bis(aminoéthyléther), diéthyléthanolamine, bis(N,N-diméthyl-3-aminopropyl)amine, diméthylaminopropylamine, 3-diméthylaminopropyl-N,N-diméthylpropane-1,3-diamine, diméthyl-2-(2-aminoéthoxyéthanol) et (1,3-bis(diméthylamino)-propan-2-ol), N,N-bis-(3-diméthylamino-propyl)-N-isopropanolamine, bis-(diméthylaminopropyl)-2-hydroxyéthylamine, N,N,N-triméthyl-N-(3 aminopropyl)-bis(aminoéthyléther), 3-diméthylaminoisopropyl-diisopropanolamine, N-[2-[2-(diméthylamino)éthoxy]éthyl]-N-méthyl-1,3-propanediamine et leurs mélanges.

11. Procédé selon l'une quelconque des revendications 7 à 10, **caractérisé en ce que** le catalyseur, en plus du catalyseur amine, présente un catalyseur métallique, le catalyseur métallique étant de préférence un catalyseur à l'étain(IV).

12. Procédé selon l'une quelconque des revendications 1 à 11, **caractérisé en ce que** le polyisocyanate aromatique contient des isomères et homologues du diphénylméthane diisocyanate.

13. Procédé selon l'une quelconque des revendications 1 à 12, **caractérisé en ce que**, pour la préparation du mélange réactionnel, un composant isocyanate (A), contenant un polyisocyanate aromatique (a), et un composant polyol (B), contenant un mélange comprenant des composés polymériques comportant des groupes réactifs vis-à-vis des isocyanates (b), un catalyseur (d) et un agent gonflant, sont mélangés.

14. Procédé selon l'une quelconque des revendications 1 à 13, **caractérisé en ce que** le mélange réactionnel est transformé en mousse souple de polyuréthane dans un moule.

15. Polyuréthane pouvant être obtenu selon un procédé selon l'une quelconque des revendications 1 à 14.

16. Utilisation d'une mousse de polyuréthane selon la revendication 15 pour la fabrication de coussins, coussins d'assise, matelas.
